**Europäisches Patentamt**

**European Patent Office**

**Office européen des brevets**

(19)

(11) Veröffentlichungsnummer: **0 097 191**
**B1**

(12) ## EUROPÄISCHE PATENTSCHRIFT

(45) Veröffentlichungstag der Patentschrift:
**27.08.86**

(51) Int. Cl.⁴: **B 25 J 9/00**

(21) Anmeldenummer: **83900032.0**

(22) Anmeldetag: **22.12.82**

(86) Internationale Anmeldenummer:
**PCT/EP 82/00271**

(87) Internationale Veröffentlichungsnummer:
**WO 83/02249 (07.07.83** Gazette 83/16)

(54) **MONTAGEROBOTER.**

(30) Priorität: **24.12.81 DE 3151503**

(43) Veröffentlichungstag der Anmeldung:
**04.01.84 Patentblatt 84/1**

(45) Bekanntmachung des Hinweises auf die Patenterteilung:
**27.08.86 Patentblatt 86/35**

(84) Benannte Vertragsstaaten:
**AT BE CH DE FR GB LI NL SE**

(56) Entgegenhaltungen:
**DE - B - 2 558 493**
**US - A - 2 858 947**
**US - A - 3 449 769**
**US - A - 3 535 711**
**US - A - 3 631 542**
**US - A - 4 046 262**

(73) Patentinhaber: **Richter, Hans, Oberländer Strasse 123,
D-8900 Augsburg (DE)**

(72) Erfinder: **Richter, Hans, Oberländer Strasse 123,
D-8900 Augsburg (DE)**

(74) Vertreter: **Charrier, Rolf, Dipl.-Ing.,
Postfach 260 Rehlingenstrasse 8,
D-8900 Augsburg 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Montageroboter mit mehreren über Gelenke miteinander verbundenen, schalenförmig ausgebildeten Armgliedern, die gelenkig mit einem Brustschild verbunden sind und in die ein menschlicher Arm einführbar ist, jedem Armglied mindestens ein Sensor zugeordnet ist, der bei der Programmierung des Roboters eine Bewegung des ihm zugeordneten Armgliedes infolge einer Bewegung des in die Armglieder eingeführten menschlichen Arms erfasst und die von den Sensoren erzeugten Signale aufgezeigt werden, welche bei der Wiedergabe Antriebsmittel steuern.

Moderne Handhabungsgeräte weisen üblicherweise am Ende eines mehrgliedrigen Armes eine Hand auf, welche Handhabungen ausführt. Beispielsweise trägt die Hand eine Schweissvorrichtung, welche zum Zusammenschweissen von Karosserieteilen dient. Hierbei soll die Hand bestimmte Bahnkurven im Raum ausführen.

Bei einem bekannten Roboter ist eine erste vertikale Drehachse vorhanden. Der mehrgliedrige Arm vermag horizontale und vertikale Bewegungen und durch Überlagerung dieser Bewegungen sich ergebende Schwenkbewegungen auszuführen. Die am Ende des Arms angeordnete Hand ist um eine erste Drehachse drehbar, welche in Achsrichtung des Armes verläuft. Die Hand weist eine dazu rechtwinklige weitere Drehachse auf und letztlich eine zur weiteren Drehachse rechtwinklig verlaufende vierte Drehachse.

Es ist ausserordentlich schwierig, die Antriebsmotoren für die verschiedenen Bewegungen des Handhabungsgeräts so zu steuern, dass die gewünschte Bahnkurve sich ergibt. Üblicherweise wird die Bahnkurve in lineare Streckenabschnitte aufgeteilt, so dass die Bahnkurve streckenweise durchfahren wird. Der Programmieraufwand zur programmierten Steuerung der Antriebsmotoren ist hierbei sehr gross.

Um den Programmieraufwand zu verringern, ist es bekannt, das Arm-, Hand-, Gliederaggregat des Handhabungsgeräts durch ein Lehrgerüst zu umgeben, das dem Arm-, Hand-, Gliederaggregat parallel zugeordnet ist (DE-A 2 435 156). Die Glieder des Lehrgerüsts sind mit einer der Zahl der Drehachslinien entsprechenden Zahl von Schaltern versehen. Das Lehrgerüst besteht im wesentlichen aus drei Gliedern, die über Drehlager miteinander verbunden sind und sich elastisch über Federn am Arm-, Hand-, Gliederaggregat abstützen. Bei Relativbewegungen zwischen den Arm- und Handgliedern und den Gliedern des Lehrgerüsts werden die vorerwähnten Schalter betätigt, deren Signale aufgezeichnet werden und ein Steuerprogramm für die Antriebsmotoren des Handhabungsgeräts bestimmen.

Der ausserordentlich komplizierte Aufbau des Lehrgerüsts macht diese Art von Programmiervorrichtung sehr teuer. Das unvermeidliche Spiel zwischen den einzelnen Gliedern führt zwangsläufig dazu, dass eine Fehlprogrammierung stattfindet, die um so grösser ist, je grösser dieses Spiel sich bei den Schaltern auswirkt. Eine Fehlprogrammierung wird noch dadurch bewirkt, dass das Eigengewicht des Lehrgerüsts je nach dessen Stellung zu Signalen bei den Schaltern führt, obwohl keine entsprechende Kraft von Hand auf den am Lehrgerüst angeordneten Handgriff ausgeübt wird.

Der DE-B 2 841 284 ist eine weitere Programmiervorrichtung entnehmbar, welche aus einem Mittelteil und einer über dem Mittelteil angeordneten Hülse besteht. Das Mittelteil wird starr mit einem Glied eines Roboters verbunden. Die Hülse kann sich relativ zum Mittelteil in den Achsen bewegen, in denen sich das mit dem Mittelteil verbundene Glied zu bewegen vermag. Zwischen dem Mittelteil und der Hülse sind Messwertgeber angeordnet, welche die in den Bewegungsrichtungen der Hülse relativ zum Mittelteil auftretenden Kraftkomponenten erfassen, wenn die Hülse von Hand geführt wird.

Die von den Messwertgebern erzeugten elektrischen Signale müssen in komplizierten Umrechnungsprozessen umgesetzt werden in Steuersignale für die Antriebsmotoren der Glieder des Roboters.

Die vorerwähnten Programmiervorrichtungen sind für Roboter gedacht, welche nur relativ einfache Bewegungen auszuführen vermögen. Der Steuerungsaufwand ist erheblich und bedarf jeweils komplizierter Rechenprogramme. Diese Roboter sind üblicherweise nicht geeignet, Montagen durchzuführen, die ein Mensch durchzuführen in der Lage ist.

Der FR-A 1 537 663 ist ein weiteres Robotersystem entnehmbar, welches einmal aus dem Roboter selbst und zum anderen aus einem Lerngerüst besteht. Das Lerngerüst trägt an seinem vorderen Ende einen Handgriff und seine Glieder sind bezüglich ihrer Länge und bezüglich ihrer Gelenkanordnung näherungsweise den Armgliedern einer menschlichen Hand nachgebildet. Gleiches gilt bezüglich der Glieder des eigentlichen Roboters. Jedem Gelenk des Lerngerüsts sind Messwertaufnehmer bzw. Sensoren zugeordnet, welche die Bewegungen der Glieder erfassen, wenn das Lerngerüst von Hand geführt wird. Die Signale der Sensoren werden aufgezeichnet und dienen zur Steuerung der Motoren für den Antrieb der Glieder des Roboters.

Das letzte Glied des Roboters ist hierbei als Drehzange ausgebildet. Gegenüber den eingangs erwähnten Robotern ist hierbei der Programmieraufwand geringer, jedoch ist auch dieser Roboter nur bedingt geeignet, Montagearbeiten auszuführen, die der Mensch ausführen kann.

Weiterhin ist zum Stand der Technik noch zu erwähnen die US-A 3 648 143, die einen Roboter entsprechend der vorerwähnten FR-A zeigt, jedoch mit dem Unterschied, dass der Roboter selbst ein Lerngerüst darstellt. Die Antriebsmotoren dienen gleichzeitig als Sensoren, die Signale erzeugen; wenn die Glieder von Hand geführt werden. Am vorderen Ende des Roboters ist keine Drehzange, sondern ein oder zwei Glieder entsprechend einem oder zwei Finger einer menschlichen Hand vorgesehen. Werden die Glieder von Hand geführt, dann werden gleichzeitig die Elektromotoren angesteuert, um die Führung der Glieder von Hand zu erleichtern. Dies führt jedoch zu Überlagerungen der von Hand und der von den Motoren ausgeübten Kräften und zu Rückkopplungen der von den Motoren ausgeführten Nachsteuerbewegungen. Die Bewegungen, die später die Glieder des Roboters ausführen, sind hierdurch ruckartig und nicht präzise. Durch die Ausbildung der Roboterhand mit maximal nur zwei Fingergliedern sind nur zangenartige Bewegungen dieser Hand möglich, so dass auch hier der Nachteil besteht, dass Montagearbeiten, die der Mensch durchzuführen vermag, von diesem Roboter nur bedingt ausgeführt werden können.

Der eingangs genannte Roboter ist der US-A 4 046 262 entnehmbar. Es handelt sich hierbei um ein Robotersystem, bestehend aus einem Lern- und einem Arbeitsroboter, wobei die programmierende Person im Lernroboter Platz nimmt und die zu programmierenden Bewegungen ausführt, die von Sensoren, die jeweils an einem Gelenk angeordnet sind, in aufzuzeichnende elektrische Signale umgesetzt werden. Diese Signale steuern bei ihrer Wiedergabe die elektrischen Antriebsmotoren des Arbeitsroboters.

Die Schulter und der Oberarm werden hierbei durch drei Hohlglieder nachgebildet, die jeweils über ein Gelenk miteinander verbunden sind. Der Unterarm wird ebenfalls durch drei über Drehgelenke miteinander verbundene Hohlglieder nachgebildet. Die Drehgelenke sind mit ihren Drehachsen zum Teil koaxial, zum Teil winkelig zu den Achsen der Hohlglieder angeordnet. Bewegungen des Schultergelenks und des Ellbogengelenks sind durch das Zusammenwirken von jeweils drei Drehgelenken simulierbar, wobei jedoch nur ein Teil der möglichen Bewegungen eines Menschen ausführbar ist, weil die Länge der Hohlglieder und die Ausbildungen der Gelenke nicht denjenigen eines Menschen entspricht.

Es besteht die Aufgabe, den Montageroboter so auszubilden, dass er Werkstücke und Werkzeuge im wesentlichen gleich wie ein Mensch zu manipulieren vermag.

Bei einem Montageroboter der eingangs genannten Art wird diese Aufgabe gelöst durch die Merkmale des kennzeichnenden Teils des Anspruches 1. Vorteilhafte Ausgestaltungen sind den Unteransprüchen entnehmbar.

Ausführungsbeispiele werden nachfolgend anhand der Zeichnungen näher erläutert. Es zeigen:

Fig. 1 die Vorderansicht eines ersten Ausführungsbeispiels des Montageroboters;
Fig. 2 eine teilweise im Schnitt dargestellte Hand des Roboters nach Fig. 1;
Fig. 3 einen Schnitt längs der Linie III-III in Fig. 2 während des Programmierens;
Fig. 4 einen entsprechenden Schnitt im Arbeitszustand der Hand;

Fig. 5 eine durch den Kreis in Fig. 4 erfasste Einzelheit dieses Schnitts;
Fig. 6 einen Teilschnitt durch eine Greiffläche eines Hohlgliedes mit dort angeordnetem Drucksensor;
Fig. 7 eine Vorderansicht einer zweiten Ausführungsform des Montageroboters;
Fig. 8 eine dritte Ausführungsform des in Vorderansicht dargestellten Montageroboters;
Fig. 9 eine vierte Ausführungsform des in Vorderansicht dargestellten Montageroboters;
Fig. 10 eine fünfte Ausführungsform des ebenfalls in Vorderansicht dargestellten Montageroboters und
Fig. 11 eine perspektivische Ansicht auf die Rückseite des Oberteils eines Montageroboters.

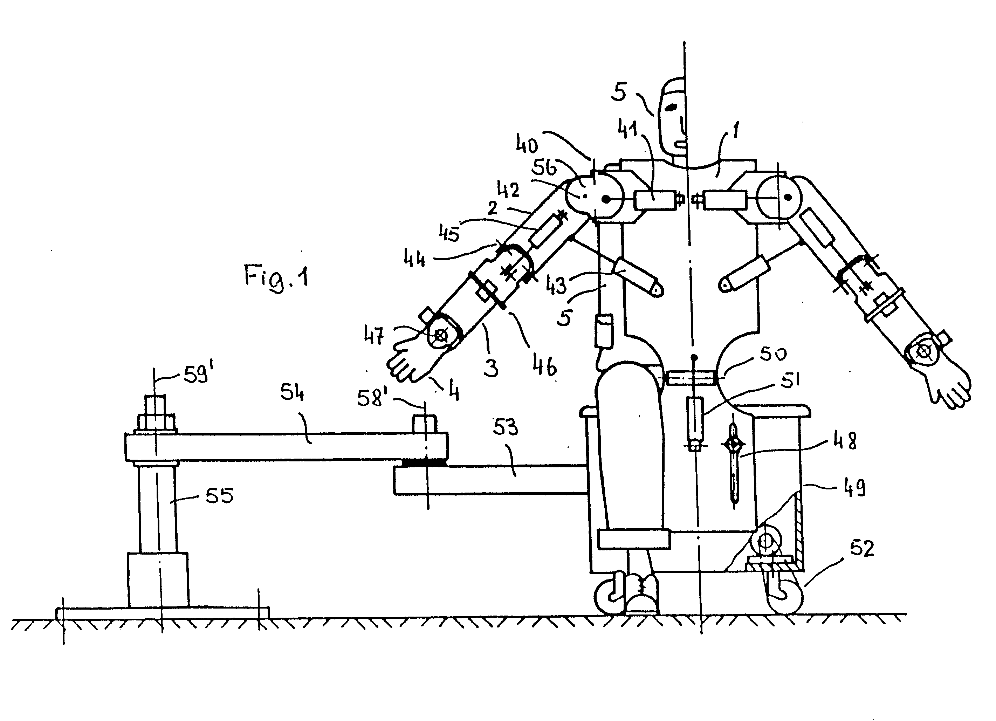

Der prinzipielle Aufbau des Montageroboters wird anhand der Fig. 1 erläutert. An einem Brustschild 1 ist ein Oberarmglied 2 angelenkt, an welchem ein Unterarmglied 3 angelenkt ist, an welchem wiederum eine Hand 4 angelenkt ist. Das Oberarmglied 2 ist gegenüber dem Brustschild 1 um eine vertikale Achse 40 und um eine horizontale Achse 42 schwenkbar. Die Verschwenkung um die vertikale Achse 40 erfolgt mittels eines Hydraulikzylinders 41, während die Verschwenkung um die horizontale Achse 42 durch einen Hydraulikzylinder 43 bewirkt wird. Das Unterarmglied 3 ist relativ zum Oberarmglied 2 verschwenkbar um eine Achse 44, wobei die Verschwenkung bewirkt wird durch einen Hydraulikzylinder 45. Das Unterarmglied 3 ist zweigeteilt ausgebildet, wobei zwischen den beiden Teilen ein Drehgelenk 46 vorgesehen ist. Die Achse des Drehgelenks 46 verläuft gleich der Achse des Unterarmgliedes 3. Diesem Drehgelenk 46 ist ein Antriebsmotor zugeordnet, welcher nur schematisch dargestellt ist. Das Unterarmglied 3 ist mit der Hand 4 über ein Kreuzgelenk 47 verbunden, dessen Achsen senkrecht zueinander und senkrecht zur Achse des Drehgelenks 46 verläuft.

Der Brustschild 1 ist mittels einer Schiebeführung 48 höhenverstellbar an einem Stuhl 49 befestigt. Der Stuhl 49 wird von allseits drehbaren Rädern 52 getragen. Der Brustschild ist zweigeteilt ausgebildet, wobei Oberteil und Unterteil über ein horizontal verlaufendes Gelenk 50 miteinander verbunden sind. Eine Verschwenkbewegung um die Achse des Gelenks 50 kann bewirkt werden durch den Hydraulikzylinder 51. Der Stuhl 49 ist verbunden mit einem ersten Hebelarm 53, der über eine vertikale Drehachse verbunden ist mit einem zweiten Hebelarm 54, der seinerseits über eine vertikale Drehachse schwenkbar verbunden ist mit einer Stütze 55.

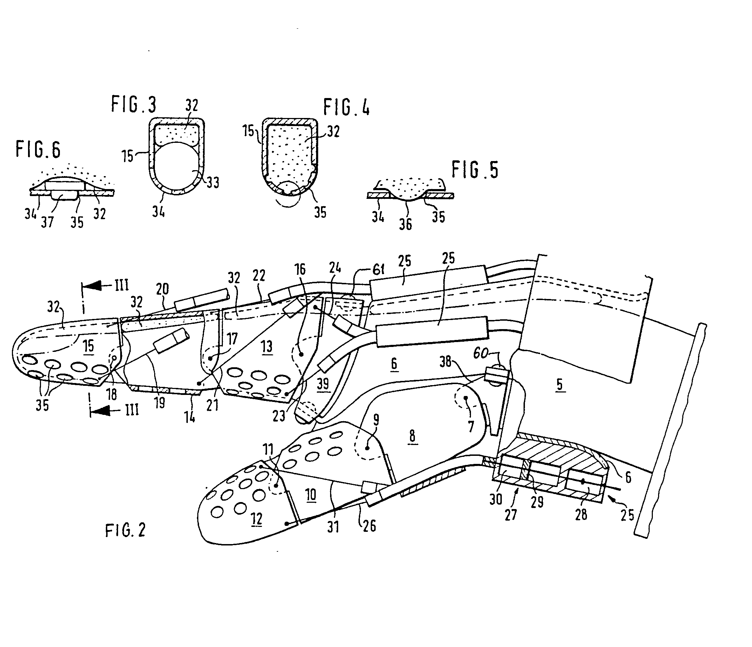

Jedem der vorerwähnten Hydraulikzylinder 41, 43, 45 und 51 sowie jeder Gelenkachse ist ein Wegmessgeber bzw. Sensor zugeordnet. Einzelheiten werden nachfolgend anhand der Fig. 2 erläutert.

Zur Programmierung wird wie folgt vorgegangen:

Die zu programmierende Person 5 nimmt auf

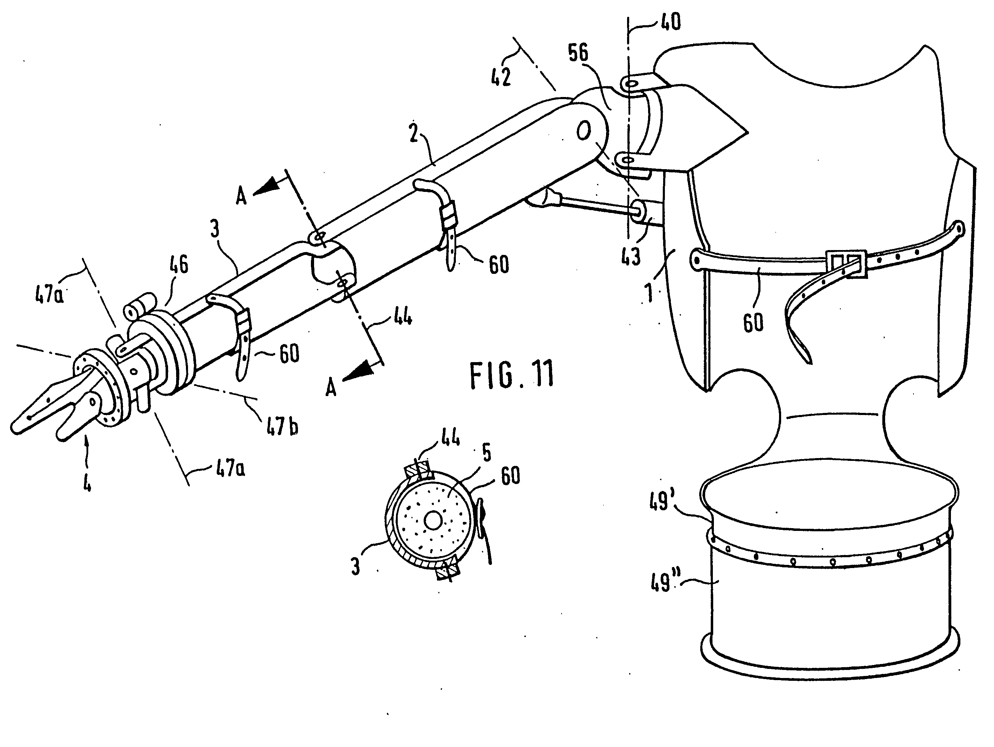

dem Stuhl 49 Platz. Der Brustschild 1 wird, wie anhand der Fig. 11 noch erläutert wird, mit dem Oberkörper verbunden. Die Hände der Person 5 werden in die handschuhartige Hand 4 eingeführt und Ober- und Unterarm werden verbunden mit den Oberarm- und Unterarmgliedern 2 bzw. 3.

Alle Bewegungen der Person 5, welche diese mit dem Oberkörper, den Armen, den Händen sowie den Fingern ausführt, werden durch die jeweils an den Gelenkachsen vorgesehenen Sensoren erfasst und die dabei erzeugten elektrischen Signale gespeichert. Gleiches gilt auch, wenn die Person 5 mittels der Füsse den Stuhl 49 verfährt.

Die Person 5 führt hierbei die Arbeiten aus, welche der Montageroboter nachvollziehen soll.

Nachdem die Person 5 die Arbeiten durchgeführt hat, die später der Roboter nachvollziehen soll, wird die Person 5 von dem Montageroboter gelöst und die von den Sensoren aufgezeichneten Signale dienen anschliessend zur Steuerung der Antriebsmittel, wie beispielsweise der Zylinder 41, 43, 45, 51 für die verschiedenen Bewegungsachsen.

Der Aufbau der Hand 4, die auch als Greif- und Montagevorrichtung bezeichnet werden kann, wird nachfolgend anhand der Fig. 2 bis 5 näher erläutert.

Die Fig. 2 zeigt die Verhältnisse beim Programmieren der Hand 4 des Montageroboters mittels der Hand der Bedienungsperson 5.

Mit dem Unterarmglied 3 des Roboters ist über das Kreuzgelenk 47 ein hohles Mittelhandglied 6 verbunden. Über ein Gelenk 7 ist ein erstes Hohlglied 8 angelenkt. An diesem ist wiederum über eine Gelenkverbindung 9 ein zweites Hohlglied 10 und an diesem über eine weitere Gelenkverbindung 11 ein drittes Hohlglied 12 angelenkt. Die Hohlglieder 8, 10, 12 sind hierbei den Fingergliedern des Daumens nachgebildet.

Entsprechendes gilt bezüglich der Hohlglieder 13, 14, 15, welche den Fingergliedern des Zeigefingers nachgebildet sind. Das Hohlglied 13 ist hierbei über die Gelenkverbindung 16 mit dem Mittelhandglied 6 verbunden, das Hohlglied 14 über die Gelenkverbindung 17 mit dem Hohlglied 13 und das Hohlglied 15 über die Gelenkverbindung 18 mit dem Hohlglied 14.

Je nach den Aufgaben, welche die Greif- und Montagevorrichtung, d.h. die Hand 4, zu erfüllen hat, können weitere Hohlglieder vorgesehen sein, welche dem Mittelfinger, dem Zeigefinger und dem kleinen Finger einer menschlichen Hand nachgebildet sind.

Beidseits jeder Gelenkachse 7, 9, 11, 16, 17, 18 greift im gezeigten Ausführungsbeispiel ein relativ steifer Seilzug an, über welchen die einzelnen Hohlglieder um ihre zugehörige Gelenkachse geschwenkt werden können. Bezüglich des Hohlgliedes 15 handelt es sich hierbei um die Seilzüge 19, 20, bezüglich des Hohlgliedes 14 um die Seilzüge 21, 22 und bezüglich des Hohlgliedes 13 um die Seilzüge 23, 24. Dies gilt entsprechend für die anderen Hohlglieder der Vorrichtung 3.

Jeder Seilzug endet in einer Motorsensorvorrichtung 25, welche starr auf dem Mittelhandglied 6 angeordnet ist. Die Motorsensorvorrichtung 25 für den Seilzug 26 des Hohlgliedes 12 ist im Schnitt dargestellt.

Jede Motorsensorvorrichtung 25 besteht aus einem Motorteil 27 und einem Sensorteil 28. Bei dem Motorteil 27 handelt es sich bevorzugt um einen Linearmotor, insbesondere in Form eines Zylinders mit darin beweglichen Kolben 29, der mit dem Seilzug 26 verbunden ist. Der Sensorteil 28 besteht aus einem Wegsensor bekannter Bauart, mit dem der Seilzug 26 ebenfalls verbunden ist.

Beim Programmieren werden die Motorteile 27 der Motorsensorvorrichtungen 25 von keinem Druckmedium beaufschlagt. Die von der Hand der Person 5 bzw. von deren Fingergliedern ausgeführten Bewegungen werden von den Hohlgliedern mit ausgeführt und über die relativ steifen Seilzüge jeweils auf die Sensorteile 28 übertragen. Die dabei gemessenen Wege werden von den Sensorteilen 28 in elektrische Signale umgesetzt, welche gespeichert werden. Diese Signale bestimmen das anschliessend auszuführende Greif- und Montageprogramm.

Diese gespeicherten Signale bestimmen, wenn sie von den Signalspeichern abgerufen werden, über nicht dargestellte Ventile die Zufuhr bzw. Abfuhr eines Druckmediums in und aus den Druckkammern 30 der Zylinder der Motorsensorvorrichtungen 25. Wird die Kammer 30 des dem Seilzug 26 zugehörigen Zylinders mit Drucköl beaufschlagt, dann führt der Kolben 29 eine Bewegung nach rechts aus, wodurch das Hohlglied 12 im Gegenuhrzeigersinn um seine Gelenkachse 11 geschwenkt wird. Soll das Glied 12 eine Drehbewegung im Uhrzeigersinn um die Gelenkachse 11 ausführen, dann wird die Druckkammer des dem Seilzug 30 zugeordneten Zylinders mit Drucköl beaufschlagt. Die Druckkammern 30 sind hierbei die den Hohlgliedern zugewandten Zylinderseiten der Motorteile 27.

Anstelle der gezeigten Motorteile 27 in Zylinderform können auch andere Motoren verwendet werden, welche eine Verschwenkung des jeweiligen Hohlgliedes um seine Gelenkachse bewirken. Zwischen den Motoren und den zugehörigen Hohlgliedern müssen nicht notwendigerweise Seilzüge verlaufen. Es ist auch eine Übertragung mittels jeweils eines Hebels denkbar, welcher exzentrisch zur jeweiligen Gelenkachse am jeweiligen Hohlglied angelenkt ist, wobei dann der den Hebel bewegende Motor Kräfte in beiden Bewegungsrichtungen auf den Hebel auszuführen vermag. Zur Bewegung um die Gelenkachsen 40, 42, 44, 47 und 50 werden dagegen bevorzugt die in Fig. 1 dargestellten Hydraulikzylinder verwendet.

Bei der Bewegung der Hohlglieder mittels der Motorteile 27 können dann die Sensorteile 28 zur Ermittlung der Ist-Stellungen der Hohlglieder herangezogen werden, wobei in einer Programmeinheit ein Ist-Sollwertvergleich durchführbar ist.

Damit die Lage der Hand der Bedienungsperson 5 in bezug auf die Greif- und Montagevorrichtung 3 einwandfrei definiert ist, ist im Inneren jedes Hohlgliedes an der der Greiffläche entgegengesetzten Seite ein aufblasbares Schlauchteil 32 vorgesehen. Nach Einführen der Hand der Bedienungsperson 5 in die Hand 4 werden die Schlauchteile 32 aufgeblasen, wodurch die Greiffläche jedes Fingers in Kontakt tritt mit der Innenseite der Greiffläche jedes Hohlgliedes. Diese Verhältnisse sind in Fig. 3 gezeigt, wo das Fingerglied 33 in Kontakt steht mit der Innenseite der Greiffläche 34 des Hohlgliedes 14.

Bevorzugt ist die Greiffläche 34 jedes Hohlgliedes mit Perforationen 35 versehen. Beim Ausführen des Greif- und Montageprogramms wird jedes Schlauchteil 32 so weit aufgeblasen, dass es noppenförmig die Perforationen 35 zu durchdringen vermag. Dies geht besonders deutlich aus der Fig. 5 hervor. Diese über die Greiffläche 34 überstehenden Noppen 36 bewirken einen guten Halt des zu greifenden Werkstücks.

In einige der Perforationen 35 können Drucksensoren 37 eingesetzt sein, über welche der Anpressdruck zwischen dem jeweiligen Fingerglied und dem gegriffenen Gegenstand, d.h. dem Werkstück, erfassbar ist. Übersteigt der Anpressdruck einen bestimmten Wert, bewirkt das Signal des Sensors 37, dass die Schliessbewegung der Greifhand unterbrochen wird.

Das hohle Mittelhandglied 6 ist gelenkig mit dem Unterarmglied 3 des Roboters verbunden. Die Verbindung erfolgt über das Kreuzgelenk 47, dessen Drehachsen senkrecht zueinander verlaufen und die ihrerseits senkrecht zur Drehachse des Drehgelenks 46 verlaufen. Auf diese Weise kann das Mittelhandglied 6 Dreh- und/oder Schwenkbewegungen in bezug auf das Glied 3 ausführen, welche beim Programmieren über entsprechende Sensoren erfasst werden, wobei die dabei erzeugten Signale gespeichert werden und einen oder mehrere Motoren ansteuern, welche den Drehachsen des Kreuzgelenks 47 und des Drehgelenks 46 zugeordnet sind, um entsprechende Dreh- und/oder Schwenkbewegungen nachvollziehen zu können.

Das jeweils erste Hohlglied eines Fingers, wie beispielsweise die Hohlglieder 8 und 13 können zusätzlich seitenbeweglich ausgebildet sein. Zu diesem Zweck sind sie nicht direkt am Mittelhandglied 6, sondern an einem Zwischenglied 38 bzw. 39 angeordnet, das über eine Gelenkachse 60 bzw. 61 am Mittelhandglied 6 befestigt ist, welche im wesentlichen senkrecht zur Gelenkachse 7 bzw. 16 verläuft. Links und rechts dieser Gelenkachse 60 bzw. 61 greifen wiederum je ein Seilzug an, der wie vorbeschrieben zu je einer Motorsensorvorrichtung 25 führt.

Im Ausführungsbeispiel nach Fig. 1 ist zwischen Brustpanzer 1 und Oberarmglied 2 ein Zwischenglied 56 vorgesehen. Der Zylinder 41 ist über vertikale Achsen einerseits mit dem Brustschild 1 andererseits mit dem Oberarmglied 2 verbunden. Der zwischen Brustschild 1 und Oberarmglied 2 verlaufende Zylinder 43 ist dagegen über Kugelgelenke mit dem Brustschild 1 und dem Oberarmglied 2 verbunden. Die beim Kreuzgelenk 47 schematisch dargestellten Achsen sind zu ihrer Darstellung um 90° aus ihrer gemeinsamen Ebene geklappt. Zwischen dem ersten Hebelarm 53 und dem Stuhl 49 kann eine vertikale Drehachse mit Motor und Sensor vorgesehen sein, ebenso wie bei den vertikalen Drehachsen zwischen den beiden Hebelarmen 53, 54 und dem zweiten Hebelarm 54 und der Stütze 55. Wird von der Bedienungsperson 5 die Lage des Stuhles 49 verändert, dann erfassen die jeweiligen Sensoren die Wege bzw. Schwenkwinkel, die gespeichert werden. Bei Abruf der gespeicherten Werte kann dann der Stuhl 49 entsprechend den gespeicherten Werten mittels der Motoren verfahren werden.

Wie schon erwähnt, dient das vertikale Gelenk 50 mit dem Hydraulikzylinder 51 zur Durchführung von Nickbewegungen des oberen Teils des Brustpanzers 1.

Die beim rechten Arm in Fig. 1 erläuterten und dargestellten Verhältnisse gelten auch für den dort dargestellten linken Arm.

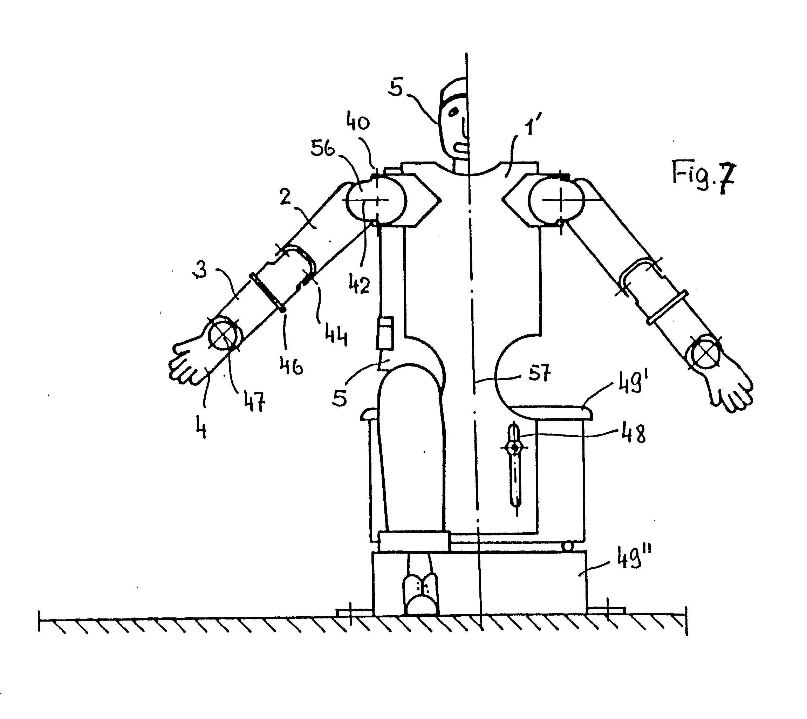

Bei der Ausführungsvariante nach Fig. 7 ist der Brustschild 1' einteilig ausgebildet und höhenverstellbar an einem oberen Stuhlteil 49' befestigt, der um eine vertikale Achse 57 mit einem unteren Stuhlteil 49" verbunden ist. Zwischen den beiden Stuhlteilen 49' und 49" ist ein Antriebsmotor und ein Sensor vorgesehen. Drehbewegungen, welche die Bedienungsperson 5 ausführt, werden von diesem Sensor erfasst, in elektrische Signale umgesetzt, welche gespeichert werden, so dass bei einem Abruf dieser gespeicherten Signale von ihnen der vorgenannte Motor angesteuert werden kann, so dass die Drehbewegung zwischen den beiden Stuhlteilen 49' und 49" nachvollziehbar ist. Im übrigen entspricht dieses Ausführungsbeispiel demjenigen nach Fig. 1.

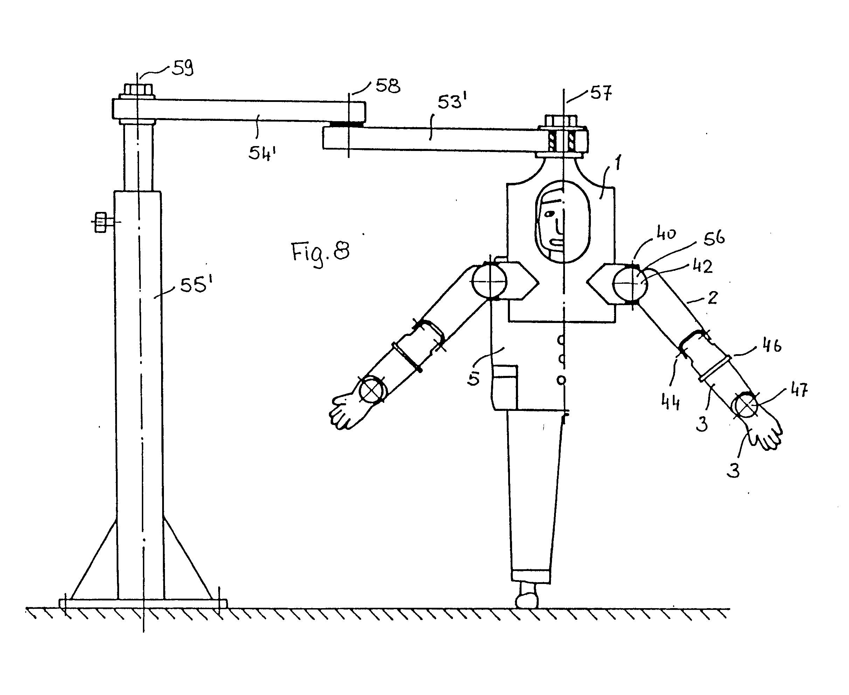

Bei dem Ausführungsbeispiel nach Fig. 8 ist der Brustschild 1 über ein vertikales Gelenk 57 verbunden mit einem ersten Hebelarm 53. Dieser erste Hebelarm 53 ist über ein weiteres vertikales Gelenk 58 verbunden mit einem zweiten Hebelarm 54', der über ein weiteres vertikales Gelenk 59 verbunden ist mit der Stütze 55'. Diese Stütze 55' ist höhenverstellbar. Den Drehgelenkachsen 57, 58 und 59 ist jeweils ein Motor und ein Sensor zugeordnet. Bewegungen, welche die Bedienungsperson 5 ausführt, sind somit über die Sensoren erfassbar und durch deren gespeicherte Signale über die Antriebsmotoren reproduzierbar.

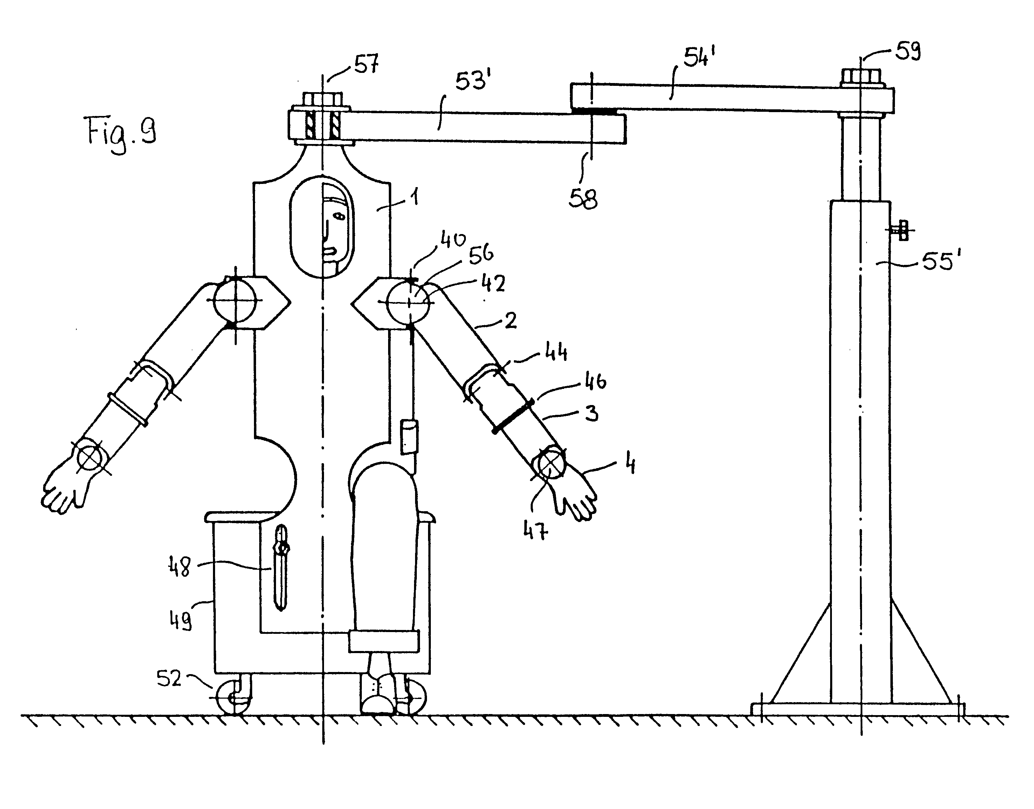

Bei dem Ausführungsbeispiel nach Fig. 9 wird der Brustschild 1 wiederum getragen durch die Hebelarme 53' und 54' sowie durch die Stütze 55' entsprechend Fig. 8, jedoch steht die Bedienungsperson 5 nicht wie bei Fig. 8, sondern sitzt auf einem von Rollen 52 getragenen Stuhl 49.

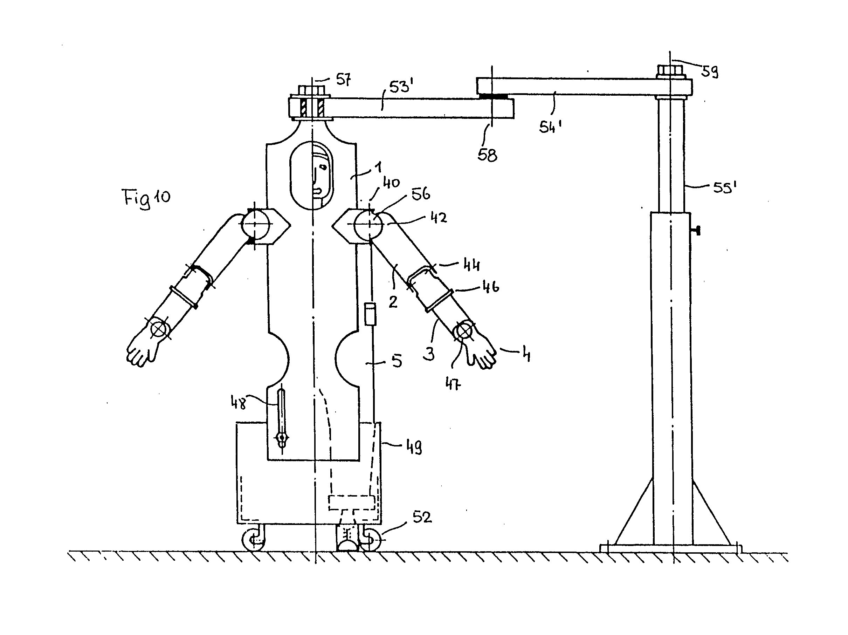

Bei dem Ausführungsbeispiel nach Fig. 10 ist der Brustschild 1 angeordnet entsprechend Fig. 9, jedoch ist der Stuhl 49' hohl ausgebildet, so dass die Bedienungsperson 5 zu gehen vermag.

Die Fig. 11 zeigt, dass der schalenförmige Brustschild 1 und die beiden Armglieder 2 und 3 jeweils mit Anschnallvorrichtungen 60 versehen sind, mit denen diese Teile an die Bedienungsperson 5 angeschnallt werden können. Die Hand 4 dagegen ist wie ein Handschuh ausgebildet, in dem die Bedienungsperson 5 die Hand und die Finger einstecken kann.

Durch die schalenförmige bzw. hohle Ausbildung der Glieder wird der grosse Vorteil erhalten, dass die Gelenkachsen zwischen den einzelnen Gliedern des Montageroboters zusammenfallen mit den Gelenkachsen der menschlichen Glieder. Hierdurch ist beim Programmieren eine einwandfreie Führung und Bewegung der Glieder des Roboters möglich.

Der Montageroboter ist insbesondere geeignet zum Einsatz für den Zusammenbau von Werkstücken und der Handhabung von Werkzeugen beim Zusammenbau von Werkstücken. Er ist insbesondere für solche Montagearbeiten geeignet, bei denen zwei menschliche Hände erforderlich sind.

Die den jeweiligen Dreh- und Gelenkachsen zugeordneten Sensoren dienen nicht nur der Erzeugung von Signalen beim Programmieren des Roboters durch eine Bedienungsperson 5, sondern dienen auch als Lagemelder beim Arbeiten des Roboters zur Anzeige der jeweiligen Stellung eines Gliedes, um einen Sollwert-Istwert-Vergleich zwischen der Ist-Lage eines Gliedes und der gespeicherten Soll-Lage durchführen zu können.

**Patentansprüche**

1. Montageroboter mit mehreren über Gelenke miteinander verbundenen, schalenförmig ausgebildeten Armgliedern (2, 3), die gelenkig mit einem Brustschild (1) verbunden sind und in die ein menschlicher Arm einführbar ist, jedem Armglied (2, 3) mindestens ein Sensor zugeordnet ist, der bei der Programmierung des Roboters eine Bewegung des ihm zugeordneten Armgliedes (2, 3) infolge einer Bewegung des in die Armglieder (2, 3) eingeführten menschlichen Arms erfasst und die von den Sensoren erzeugten Signale aufgezeichnet werden, welche bei der Wiedergabe Antriebsmittel (41, 43, 45) steuern, dadurch gekennzeichnet, dass mit dem unteren Armglied (3) schalenförmige oder hohle Fingerglieder (8, 10, 12 bis 15) gelenkig verbunden sind, in welche die Hand eines menschlichen Armes einführbar ist und denen jeweils ebenfalls mindestens ein Sensor (28) zugeordnet ist, dass die Arm- und Fingerglieder (2, 3, 8, 10, 12 bis 15) bezüglich ihrer Länge und ihrer Gelenkanordnung näherungsweise den entsprechenden Menschengliedern nachgebildet sind, dass die Achsen der die benachbarten Arm- und Fingerglieder (2, 3, 8, 10, 12 bis 15) miteinander verbindenden Gelenke (7, 9, 11, 16 bis 18, 46, 47) näherungsweise koaxial zu den entsprechenden Gelenkachsen der Menschenglieder verlaufen und dass jedem Sensor (28) ein Antriebsmittel (27, 41, 43, 45) zugeordnet ist, das die gleiche Gliedbewegung des dem Sensor (28) zugeordneten Arm- bzw. Fingerglieds (2, 3, 8, 10, 12 bis 15) bewirkt, das dieses bei der Programmierung ausführte.

2. Montageroboter nach Anspruch 1, dadurch gekennzeichnet, dass das Oberarmglied (2) über ein Kreuzgelenk (40, 42) am Brustschild (1) angelenkt ist und jeder Achse des Kreuzgelenks (40, 42) ein Wegmessensor und ein Antriebsmittel (41, 43) zugeordnet ist.

3. Montageroboter nach Anspruch 1 oder 2, dadurch gekennzeichnet, dass am Unterarmglied (3) ein Mittelhandglied (6) angeordnet ist und das Unterarmglied (3) ein Drehgelenk (46) aufweist, dessen Drehachse in Richtung des Unterarmgliedes (3) verläuft.

4. Montageroboter nach Anspruch 3, dadurch gekennzeichnet, dass zwischen dem Unterarmglied (3) und dem Mittelhandglied (6) ein weiteres Gelenk (47) vorgesehen ist, dessen eine Drehachse rechtwinklig zur Drehachse des Drehgelenks (46) verläuft.

5. Montageroboter nach Anspruch 4, dadurch gekennzeichnet, dass das weitere Gelenk als Kreuzgelenk (47) ausgebildet ist.

6. Montageroboter nach einem der Ansprüche 1 bis 5, dadurch gekennzeichnet, dass am Mittelhandglied (6) gelenkig miteinander verbundene hohle Fingerglieder (8, 10, 12 bis 15) angelenkt sind, die mindestens zwei Fingern einer menschlichen Hand nachgebildet sind.

7. Montageroboter nach Anspruch 6, dadurch gekennzeichnet, dass die Fingerglieder (8, 10, 12 bis 15) mehr als zwei Fingern einer menschlichen Hand nachgebildet sind.

8. Montageroboter nach einem der Ansprüche 1 bis 7, dadurch gekennzeichnet, dass die Antriebsmittel Hydraulikzylinder (41, 43, 45) sind, die zwischen jeweils zwei benachbarten Gliedern (z.B. 2, 3) bzw. zwischen dem Brustschild (1) und dem dort angelenkten Oberarmglied (2) angeordnet sind.

9. Montageroboter nach Anspruch 6 oder 7, dadurch gekennzeichnet, dass jedem Fingerglied (8, 10, 12 bis 15) zwei Antriebsmotoren (27) zugeordnet sind, die im Abstand links und rechts von der jeweiligen Gelenkachse (9, 11, 16 bis 18) am Fingerglied (8, 10, 12 bis 15) angreifen.

10. Montageroboter nach Anspruch 9, dadurch gekennzeichnet, dass jeder Motor (27) ein Linearmotor ist, der über einen Seilzug (z.B. 26) mit dem zugehörigen Fingerglied (z.B. 12) verbunden ist.

11. Montagevorrichtung nach Anspruch 6 oder 7, dadurch gekennzeichnet, dass die Greiffläche (34) jedes Fingergliedes (8, 10, 12 bis 15) perforiert ist und im Inneren des Fingergliedes an der der Perforation (35) gegenüberliegenden Seite ein aufblasbares Schlauchteil (32) angeordnet ist.

12. Montageroboter nach Anspruch 6 oder 7, dadurch gekennzeichnet, dass an der Greiffläche (34) mindestens eines der Fingerglieder (8, 10, 12 bis 15) ein Drucksensor (37) angeordnet ist.

13. Montageroboter nach Anspruch 6 oder 7, dadurch gekennzeichnet, dass das mit dem Mittelhandglied (6) verbundene hohle Fingerglied (8, 13) mit diesem über ein hohles Zwischenglied (38, 39) verbunden ist, das über eine Gelenkachse (60, 61) mit dem Mittelhandglied (6) verbunden ist, welche im wesentlichen senkrecht zu den übrigen Gelenkachsen (9, 11, 16 bis 18) verläuft.

14. Montageroboter nach Anspruch 13, dadurch gekennzeichnet, dass jedem Zwischenglied (38, 39) zwei Motorsensorvorrichtungen (25) zugeordnet sind, die im Abstand links und rechts der zugehörigen Gelenkachse (60, 61) angreifen.

15. Montageroboter nach einem der Ansprüche 1 bis 14, dadurch gekennzeichnet, dass der Brustschild (1) zweigeteilt ausgebildet ist und beide Teile über ein horizontales Gelenk (50) miteinander verbunden sind und zwischen diesen Teilen ein Hydraulikzylinder (51) angeordnet ist.

16. Montageroboter nach einem der Ansprüche 1 bis 15, dadurch gekennzeichnet, dass der Brustschild (1) höhenverstellbar an einem fahrbaren Stuhl (49) angeordnet ist.

17. Montageroboter nach Anspruch 16, dadurch gekennzeichnet, dass der Stuhl (49) zweigeteilt ausgebildet ist und die beiden Teile (49', 49") um eine vertikale Achse gegeneinander verdrehbar sind.

18. Montageroboter nach einem der Ansprüche 1 bis 17, dadurch gekennzeichnet, dass der Brustschild (1) oder der Stuhl (49) an einem ersten horizontalen Hebelarm (53) schwenkbar angelenkt ist, der seinerseits an einem zweiten horizontalen Hebelarm (54) schwenkbar angelenkt ist, der seinerseits an einer vertikalen Stütze (55) schwenkbar angelenkt ist und die jeweiligen Schwenkachsen (57, 58, 59) mit Sensoren und Antriebsmitteln versehen sind.

## Claims

1. Mounting robot with several arm sections (2, 3) connected to one another via joints and constructed dish-shaped, the said arm sections being connected by joints to a breastplate (1) and into which a human arm can be inserted, to each arm section (2, 3) there being associated at least one sensor, which when the robot is programmed performs a movement of the arm section (2, 3) associated to it as a result of movement of the human arm inserted in the arm sections (2, 3) and the signals produced by the sensors which control means of propulsion (41, 43, 45) on reproduction are recorded, characterised in that dishshaped or hollow finger sections (8, 10, 12 to 15) are connected by joints to the lower arm section (3), in which sections the hand of a human arm can be inserted and to which respectively at least one sensor (28) is associated, in that the arm and finger sections (2, 3, 8, 10, 12 to 15) approximately simulate the corresponding human limbs as regards their length and joint arrangement, in that the axes of the joints (7, 9, 11, 16 to 18, 46, 47) connecting adjacent arm and finger sections (2, 3, 8, 10 12 to 15) to one another pass approximately coaxially to the corresponding joint axes of the human limbs and in that to each sensor (28) means of propulsion (27, 41, 43, 45) are associated, which effect the same limb movement of the arm or finger section (2, 3, 8, 10, 12 to 15) associated to the sensor (28), which section carried this out at the time of programming.

23. Mounting robot according to Claim 1, characterised in that the upper arm section (2) is pivoted via a universal joint (40, 42) on the breast plate (1) and to each axis of the universal joint (40, 42) an odometer and a means of propulsion (41, 43) is associated.

3. Mounting robot according to Claim 1 or 2, characterised in that on the lower arm section (3) a middle hand section (6) is disposed and the lower arm section (3) has a swivel joint (46), the axis of rotation of which passes in the direction of the lower arm section (3).

4. Mounting robot according to Claim 3, characterised in that between the lower arm section (3) and the middle hand section (6) a further joint (47) is provided, one axis of rotation of which passes at right angles to the axis of rotation of the swivel joint (46).

5. Mounting robot according to Claim 4, characterised in that the further joint is constructed as a universal joint (47).

6. Mounting robot according to one of Claims 1 to 5, characterised in that on the middle hand section (6) are pivoted hollow finger sections (8, 10, 12 to 15) connected to one another by joints, which simulate at least two fingers of a human hand.

7. Mounting robot according to Claim 6, characterised in that the finger sections (8, 10, 12 to 15) simulate more than two fingers of a human hand.

8. Mounting robot according to one of Claims 1 to 7, characterised in that the means of propulsion are hydraulic cylinders (41, 43, 45), which are disposed between respectively two adjacent sections (e.g. 2, 3) or between the breastplate (1) and the upper arm sections (2) pivoted there.

9. Mounting robot according to Claim 6 or 7, characterised in that two each finger section (8, 10, 12 to 15) two drive motors (27) are associated, which act upon the finger member (8, 10, 12 to 15) at a distance to the left and to the right of the respective joint axis (9, 11, 16 to 18).

10. Mounting robot according to Claim 9, characterised in that each motor (27) is a linear motor which is connected to the associated finger section (e.g. 10) via a cable line (e.g. 26).

11. Mounting device according to Claim 6 or 7, characterised in that the gripping surface (34) of each finger section (8, 10, 12 to 15) is perforated and inside the finger section on the side opposite the perforatin (35) there is disposed an inflatable hose part.

12. Mounting robot according to Claim 6 or 7, characterised in that on the gripping surface (34) of at least one of the finger sections (8, 10, 12 to 15) a pressure sensor is disposed.

13. Mounting robot according to Claim 6 or 7, characterised in that the hollow finger section (8, 13) connected to the middle hand section (6) is connected to this via a hollow intermediate section (38, 39), which is connected via a joint axis (60, 61) to the middle hand section (6), which is substantially at right angles to the remaining joint axes (9, 11, 16 to 18).

14. Mounting robot according to Claim 13, characterised in that to each intermediate section (38, 39) two motor sensor devices (25) are associated, which act at a distance to the left and to the right of the associate joint axis (60, 61).

15. Mounting robot according to one of Claims 1 to 14, characterised in that the breastplate (1) is constructed in two parts and both parts are connected to one another via a horizontal joint (50) and a hydraulic cylinder (51) is disposed between these parts.

16. Mounting robot according to one of Claims 1 to 15, characterised in that the breast plate (1) is disposed on a mobile chair (49) with its height being adjustable.

17. Mounting robot according to Claim 16, characterised in that the chair (49) is constructed of two parts and both parts (49', 49") can be rotated in opposition to one another around a vertical axis.

18. Mounting robot according to one of Claims 1 to 17, characterised in that the breast plate (1) or the chair (49) is pivoted on a first horizontal lever arm (53), which is itself pivoted on a second horizontal lever arm (54), which is in turn pivoted on a vertical support (55) and the respective swivel axes (57, 58, 59) are provided with sensors and means of propulsion.

**Revendications**

1. Robot de montage avec un bras et un avant-bras (2, 3) en forme de cuvette, reliés entre eux par des articulations, qui sont assemblés de la même façon au buste (1), et dans lesquels un bras humain peut être introduit; au minimum un palpeur étant adjoint à chaque partie du membre, qui, lors de la programmation du robot devient sensible à un mouvement de chaque partie du bras (2, 3) qui lui est adjoint, suite aux mouvements du bras humain introduit dans les parties du bras (2, 3), et mémorise les signaux émis par les palpeurs, qui, lors du service, actionnent des mécanismes de commande (41, 43, 45), caractérisé en ce que les différentes parties creuses des doigts (8, 10, 12 à 15) ou en forme de cuvette sont reliées par des articulations à l'avant-bras (3), dans lesquelles la main humaine peut être introduite, et auxquelles respectivement au minimum un palpeur (28) est adjoint, les différentes parties du membre et des doigts (2, 3, 8, 10, 12 à 15) en ce qui concerne leur longueur et la position de leurs articulations sont approximativement correspondant aux membres humains, les axes des articulations (7, 9, 11, 16 à 18, 48, 47) reliant les parties du membre et des doigts contigus (2, 3, 8, 10, 12 à 15) sont disposés approximativement coaxialement par rapport aux articulations des membres humains correspondants et, à chaque palpeur (28) est relié un mécanisme de commande (27, 41, 43, 45) qui effectue le même mouvement qu'accomplissait la partie du membre, respectivement des doigts (2, 3, 8, 10, 12 à 15) reliée au palpeur (28) lors de la programmation.

2. Robot de montage selon la revendication 1, caractérisé en ce que le membre supérieur est articulé au buste (1) par un joint à croisillon (40, 42) et à chaque axe du joint à croissillon (40, 42) est adjoint un palpeur odométrique et un mécanisme de commande (41, 43).

3. Robot de montage selon l'une quelconque des revendications 1 ou 2 caractérisé en ce qu'un métacarpe (6) est disposé en bout de l'avant-bras (3), celui-ci (3) disposant d'une articulation (46) dont l'axe de rotation est disposé dans la direction de l'avant-bras (3).

4. Robot de montage selon la revendication 3, caractérisé en ce qu'une autre articulation (47) est prévue entre l'avant-bras (3) et le métacarpe (6) dont l'axe de rotation est disposé à angles droits par rapport à l'axe de rotation de l'articulation à charnière (46).

5. Robot de montage selon la revendication 4, caractérisé en ce que l'autre articulation est un joint à croisillon (47).

6. Robot de montage selon l'une quelconque des revendications 1 à 5, caractérisé en ce qu'au métacarpe (6) sont articulées les parties creuses des doigts (8, 10, 12 à 15) reliées entre elles par articulations, en imitant au moins deux doigts d'une main humaine.

7. Robot de montage selon la revendication 6, caractérisé en ce que les différentes parties des doigts (8, 10, 12 à 15) sont réalisées en imitant plus de deux doigts d'une main humaine.

8. Robot de montage selon l'une quelconque des revendications 1 à 7, caractérisé en ce que les mécanismes de commande sont des cylindres hydrauliques (41, 43, 45), qui sont disposés respectivement entre deux membres contigus (par exemple 2, 3) respectivement entre le buste (1) et le bras (2), qui y est articulé.

9. Robot de montage selon l'une quelconque des revendications 6 ou 7, caractérisé en ce que, à chaque partie du doigt (8, 10, 12 à 15) deux moteurs de commande (27) sont adjoints, qui, disposés à gauche et à droite de l'axe respectif des articulations (9, 11, 16 à 18) agissent sur les parties des doigts (8, 10, 12 à 15).

10. Robot de montage selon la revendication 9, caractérisé en ce que, chaque moteur (27) est un moteur électrique linéaire, relié par une commande par câble (par exemple 26) avec la partie du doigt (par exemple 12) correspondant.

11. Dispositif de montage selon l'une quelconque des revendications 6 ou 7, caractérisé en ce que, la surface de contact (34) de chaque partie du doigt (8, 10, 12 à 15) est perforée, et, à l'intérieur de la partie du doigt sur le côté opposé des perforations (35) est disposé un tuyau flexible gonflable (32).

12. Robot de montage selon l'une quelconque des revendications 6 ou 7, caractérisé en ce que, à la surface de contact (34) d'au moins une des parties des doigts (8, 10, 12 à 15) un palpeur manométrique (37) est disposé.

13. Robot de montage selon l'une quelconque des revendications 6 ou 7, caractérisé en ce que, la partie du doigt creux (8, 13) reliée au métacarpe (6), est reliée à celui-ci par une partie intermédiaire creuse (38, 39) montée sur un axe articulé (60, 61) avec le métacarpe (6), cet axe est essentiellement disposé verticalement par rapport aux autres axes des articulations (9, 11, 16 à 18).

14. Robot de montage selon la revendication 13, caractérisé en ce que, à chaque partie intermédiaire (38, 39) deux dispositifs composés de deux palpeurs à moteurs (25) sont adjoints, qui, disposés à gauche et à droite de l'axe, agissent sur l'articulation correspondante.

15. Robot de montage selon l'une quelconque des revendications 1 à 14, caractérisé en ce que, le buste (1) est constitué de deux parties et que celles-ci sont reliées entre elles par une articulation horizontale (50) et qu'entre ces deux parties est disposé un cylindre hydraulique (51).

16. Robot de montage selon l'une quelconque des revendications 1 à 15, caractérisé en ce que le buste (1), disposé sur un chariot mobile (49), est ajustable en hauteur.

17. Robot de montage selon la revendication 16, caractérisé en ce que, le chariot est constitué de deux parties et que celles-ci (49', 49″) peuvent pivoter réciproquement autour d'un axe vertical.

18. Robot de montage selon l'une quelconque des revendications 1 à 17, caractérisé en ce que, le buste (1) ou le chariot (49) est articulé de manière pivotante à un premier bras de levier horizontal (53), qui, à son tour, est articulé de manière pivotante à un deuxième bras de levier horizontal (54), lui-même articulé de la même manière sur un support vertical (55), les axes pivotants respectifs (57, 58, 59) sont munis de palpeurs et de dispositifs de commande.

Fig.1

FIG.3

FIG.4

FIG.6

FIG.5

FIG.2

Fig. 7

0 097 191

Fig. 8

Fig.9

Fig 10

FIG. 11